# EUROPEAN PATENT SPECIFICATION

(11) **EP 1 956 235 B1**
(45) Date of publication and mention of the grant of the patent: **27.10.2010**
(21) Application number: 07102020.0
(22) Date of filing: 09.02.2007
(51) Int. Cl.: F03D 1/06

(54) **Blade for a wind turbine**
Rotorblatt für eine Windenergieanlage
Pale d'éolienne

(43) Date of publication of application: 13.08.2008
(73) Proprietor: STX Heavy Industries Co., Ltd., Changwon-si Gyeongsangnam-do 641-371 (KR)
(72) Inventor: de VILDER, Gerardus, 3434DP, NIEUWEGEIN (NL)
(74) Representative: Caspary, Karsten

(56) References cited:
- EP-A1- 1 398 499
- EP-A2- 1 234 984
- WO-A-01/42647
- DE-A1- 10 336 998
- HAU ERICH ED - HAU E: "WINDKRAFTANLAGEN" WINDKRAFTANLAGEN. GRUNDLAGEN, TECHNIK, EINSATZ, WIRTSCHAFTLICHKEIT, BERLIN : SPRINGER, DE, 1996, pages 186-213, XP002143305 ISBN: 3-540-57430-1

## Description

The invention concerns a blade for a wind turbine in accordance with the preamble of claim 1. Such blades are known. (see for example the prior art document: "Windkraftanlagen, HAU E. Berlin, Springer 1996, pages 186-213). For reinforcing the composite material of the blade root, glass fibres are used. Due to the limitation of the allowable stresses in the fibres and the composite material and the high loads on the blade root where it is attached to the hub, the blade root has a considerable thickness.

In order to improve on this the blade is in accordance with claim 1. By using the stronger fibres in the blade root, such as carbon fibres or fibres of similar strength, the thickness of the wall of the blade root can be reduced. However, when the thickness of the wall is reduced in order to transmit the load in a proper way to the hub, more radial holes are needed, whereby enough space must remain available between the radial holes for the composite material and the fibres. This leads to the additional feature whereby space is made available by placing the radial holes in turns at different distances from the hub.

In accordance with the invention, first radial holes nearer to the hub have a smaller diameter than second radial holes further from the hub. This makes it possible to create a more or less constant pre-stress in the fibres in the blade root.

In accordance with the invention, the radial holes are at a constant pitch along the circumference of the blade root. This makes the load distribution on the hub more even.

In accordance with an embodiment, the blades are according to claim 2. In this way the bolts have in turns the same length and the same elastic properties, which makes pre-stressing of the bolts easier.

In accordance with an embodiment, the blades are according to claim 3. In this way there is sufficient space for proper transmitting the forces from and to the composite material.

The invention is explained hereafter with the aid of an embodiment with the use of a drawing. In the drawing
Figure 1 shows a side view of a wind turbine with a rotor mounted on a tower,
Figure 2 shows a front view of the rotor of the wind turbine of figure 1,
Figure 3 shows a side view of the blade of the rotor of figure 1,
Figure 4 shows a section of the root of the blade of figure 3,
Figure 5 shows a side view of the blade of the rotor of figure 3, with a detail A showing the mounting face with holes.
Figure 6 shows a section perpendicular to the mounting surface of the connection of the blade of figure 3 to a blade bearing, and
Figure 7 shows a section in the cylindrical plane perpendicular to the section of figure 6 with a detail B showing the direction of the various layers of fibres.

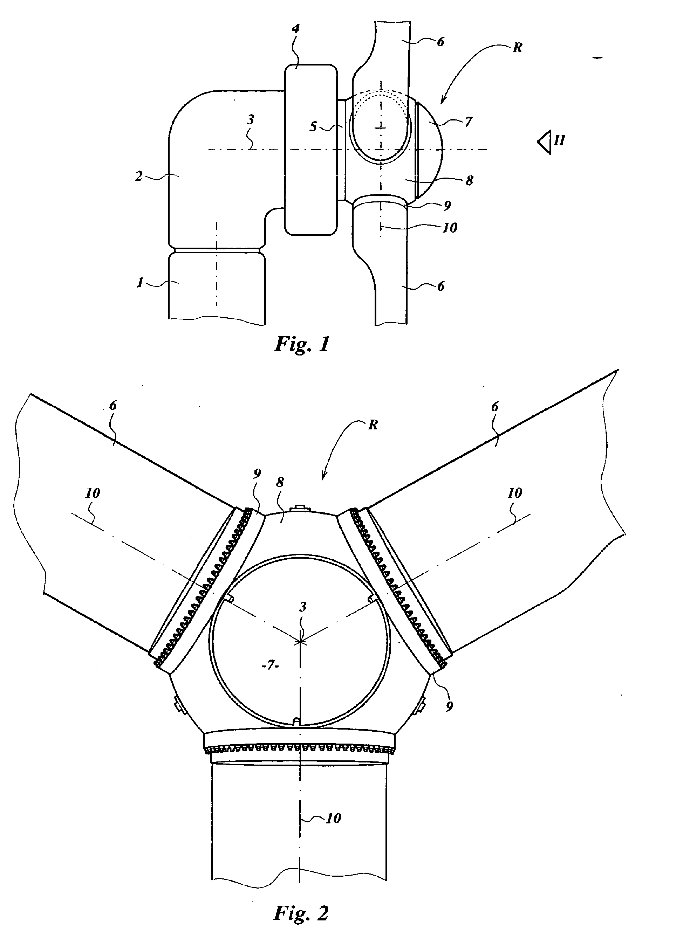

Figure 1 shows a tower 1 on which a housing 2 can be rotated to direct a rotor R towards the direction of the wind. The rotor R is coupled by a main bearing 5 to the housing 2. The rotor R comprises a hub 8 to which blades 6 are coupled via blade bearings 9 so that the blades can rotate around a blade rotation axis 10. The hub 8 is covered at the front by a cap 7. The rotor R drives a generator 4 for generating electrical power. Figure 2 shows the hub 8 of the rotor R seen from the front with the blades 6.

In the shown embodiment the blades 6 are connected via blade bearings 9 to the hub 8. The skilled man will be aware that for the connection of the blades 6 to the hub 8 other designs are possible, for instance blades directly connected to the hub without a blade bearing or blades connected to the hub via a stationary pipe, which might have an aerodynamic contour.

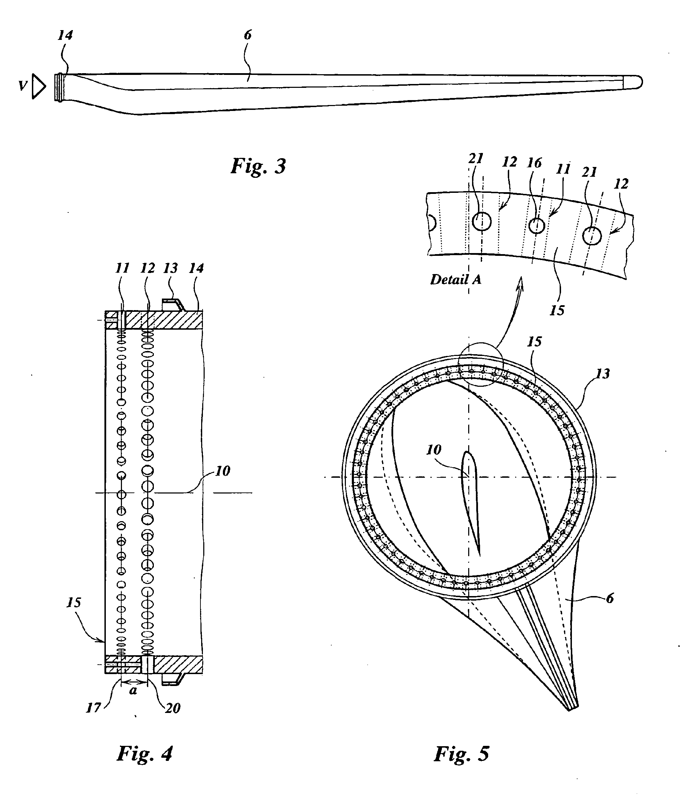

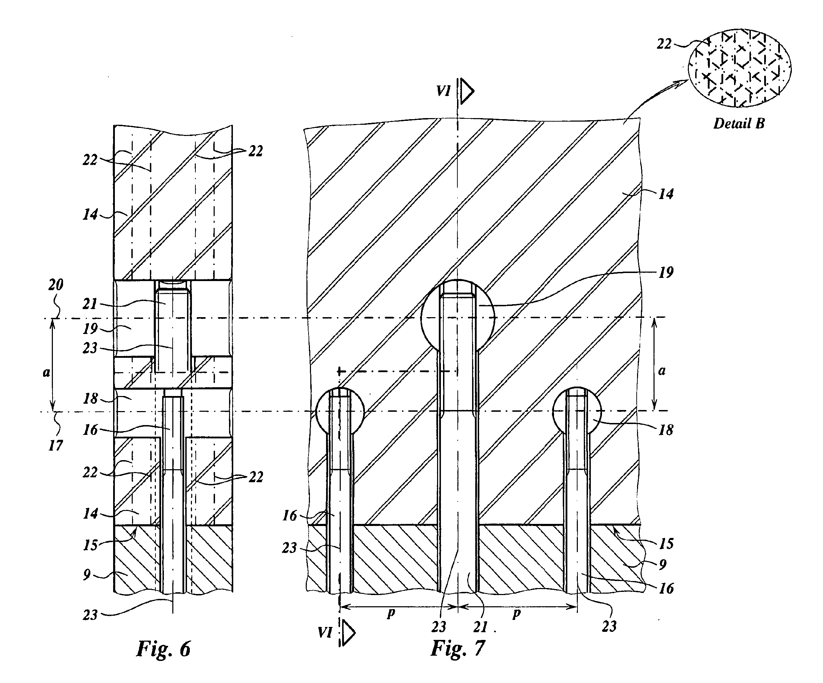

Figure 3 shows the blade 6 in side view with a blade root 14. The blade 6 is made of reinforced composite materials, for instance from polyester reinforced with carbon fibres 22 (see figures 6 and 7). Instead of carbon fibres other types of fibres of similar strength can be used. Figure 4 shows the blade root 14 with a mounting surface 15 that presses against the blade bearing 9. The blade root 14 is provided with first mounting holes 11 with centrelines in a first mounting hole plane 17 and with second mounting holes 12 with centrelines in a second mounting hole plane 20. The centrelines are radial directed towards the blade rotation axis 10. In the shown embodiment the first mounting hole plane 17 and the second mounting hole plane 20 are parallel at a distance a whereby the distance a is larger than the diameter of the first mounting hole 11 and/or the second mounting hole 12, however other distances can be chosen. Figure 5 with detail A shows the mounting surface 15 in side view and also the inside and outside contours of the blade 6.

Figure 6 and figure 7 show in detail how the blade root 14 is pulled against the blade bearing 9 by first bolts 16 and second bolts 21. The first bolts 16 are screwed into first inserts 18 that are mounted in the first mounting holes 11. The second bolts 21 are screwed into second inserts 19 that are mounted in the second mounting holes 12. The first bolts 16 and the second bolts 21 have bolt centrelines 23 that are parallel, have a constant pitch P on a pitch circle and are located more or less in the middle of the wall of the tube shaped blade root 14.

In order to transmit the forces from the blade 6 to the first bolts 16 or the second bolts 21 there are carbon fibres 22 that stretch in longitudinal direction along the blade 6 and carbon fibres 22 that are crosswise to the longitudinal direction, as indicated in detail B of figure 7. In the wall of the blade root 14 there might be ten layers of fibres 22 in the longitudinal direction and ten layers of fibres 22 that are crosswise. The carbon fibres 22 have such strength that the contact area between the inserts and the composite material forms a limitation in the transfer of force from the blade 6 to the hub 8. For this reason the mounting holes 11, 12 are in two planes 17 and 19. For proper distribution of the carbon fibres 22, or any other fibre of similar strength used to reinforce the composite material, the diameter of the first mounting holes 11 is smaller than the diameter of the second mounting holes 12, for instance the diameter of the first holes 11 is 60 - 70% of the diameter of the second holes 12. For the same reason the diameter of the first bolts 16 can be 60 - 70% of the diameter of the second bolts 21.

## Claims

1. Blade (6) for a wind turbine made from reinforced composite material and having a blade root (14) with a mounting surface (15) for coupling the blade to a hub (8) of the wind turbine wherein the blade and blade root are hollow and the blade root is shaped like a tube with a wall having reinforced fibres (22) that are carbon fibres or fibres of similar strength and radial holes (11,12) through the wall in which cylindrical inserts (18,19) can be placed and axial holes for bolts (16,21) from the radial holes towards the mounting surface and the radial holes (11,12) are at a constant pitch (P) along the circumference of the blade root, which cylindrical inserts can be coupled to the bolts for pulling the mounting surface against the hub **characterized in that**, when the blade is mounted on a hub, the radial holes (11,12) are in turns at different distances from the hub and the first radial holes (11) nearer to the hub have a smaller diameter than the second radial holes (12) further from the hub.

2. Blade in accordance with claim 1 wherein the centrelines of the radial holes (11,12) are in two planes (17,20) .

3. Blade in accordance with claim 2 wherein the planes have a distance (a) of at least the twice the diameter of a radial hole (11,12).

## Patentansprüche

1. Flügel (6) für eine Windenergieanlage, der aus einem verstärkten Verbundmaterial hergestellt ist und einen Flügelfuß (14) mit einer Befestigungsfläche (15) zum Koppeln des Flügels an eine Nabe (8) der Windenergieanlage aufweist, wobei der Flügel und der Flügelfuß hohl ausgebildet sind und der Flügelfuß röhrenartig mit einer Wand geformt ist, die verstärkte Fasern (22), die Kohlenstofffasern oder Fasern ähnlicher Stärke sind, und radiale Löcher (11, 12) durch die Wand hindurch aufweist, in die zylindrische Einsätze (18, 19) eingebracht werden können, und axiale Löcher für Schrauben (16, 21) von den radialen Löchern in Richtung der Befestigungsfläche, und wobei sich die radialen Löcher (11, 12) in einem konstantem Abstand (P) entlang des Umfangs des Flügelfußes befinden, wobei die zylindrischen Einsätze mit den Schrauben gekoppelt werden können, um die Befestigungsfläche gegen die Nabe zu ziehen,
**dadurch gekennzeichnet, dass**
wenn der Flügel auf einer Nabe montiert ist, die radialen Löcher (11, 12) in Bögen in unterschiedlichen Abständen von der Nabe angeordnet sind, und die ersten radialen Löcher (11) näher an der Nabe einen kleineren Durchmesser als die zweiten radialen Löcher (12) weiter weg von der Nabe aufweisen.

2. Flügel nach Anspruch 1, wobei die Achsen bzw. Mittellinien der radialen Löcher (11, 12) in zwei Ebenen (17, 20) angeordnet sind.

3. Flügel nach Anspruch 2, wobei die Ebenen einen Abstand (a) von mindestens dem Doppelten des Durchmessers eines radialen Loches (11, 12) aufweisen.

## Revendications

1. Pale (6) pour une turbine éolienne fabriquée à partir d'un matériau composite renforcé et ayant une emplanture de pale (14) avec une surface de montage (15) pour coupler la pale à un moyeu (8) de la turbine éolienne, dans laquelle la pale et l'emplanture de pale sont creuses et l'emplanture de pale est formée comme un tube avec une paroi ayant des fibres renforcées (22) qui sont des fibres de carbone ou des fibres de résistance similaire et des trous radiaux (11, 12) à travers la paroi dans lesquelles des pièces d'insertion cylindriques (18, 19) peuvent être placées et des trous axiaux pour des boulons (16, 21) à partir des trous radiaux vers la surface de montage, et les trous radiaux (11, 12) sont à un pas constant (P) le long de la circonférence de l'emplanture de pale, lesquelles pièces d'insertion cylindriques peuvent être couplées aux boulons pour tirer la surface de montage contre le moyeu, **caractérisée en ce que**, lorsque la pale est montée sur un moyeu, les trous radiaux (11, 12) sont tour à tour à des distances différentes du moyeu et les premiers trous radiaux (11) plus proches du moyeu ont un plus petit diamètre que les seconds trous radiaux (12) plus éloignés du moyeu.

2. Pale selon la revendication 1 dans laquelle les axes des trous radiaux (11, 12) sont dans deux plans (17, 20).

3. Pale selon la revendication 2 dans laquelle les plans ont une distance (a) d'au moins deux fois le diamètre d'un trou radial (11, 12).
